# EUROPÄISCHE PATENTSCHRIFT

(11) **EP 1 183 765 B1**
(45) Veröffentlichungstag und Bekanntmachung des Hinweises auf die Patenterteilung: **25.09.2013**
(21) Anmeldenummer: 01911380.2
(22) Anmeldetag: 24.01.2001
(51) Int. Cl.: H02J 1/10

(54) **VERFAHREN UND VORRICHTUNG ZUR REGELUNG DES PARALLELBETRIEBES VON GLEICHSPANNUNGSWANDLERN**
METHOD AND DEVICE FOR REGULATING THE PARALLEL OPERATION OF DC CONVERTERS
PROCEDE ET DISPOSITIF POUR REGULER LE FONCTIONNEMENT EN PARALLELE DE CONVERTISSEURS CONTINU-CONTINU

(30) Priorität: 28.01.2000 DE 10003730
(43) Veröffentlichungstag der Anmeldung: 06.03.2002
(73) Patentinhaber: ROBERT BOSCH GMBH, 70442 Stuttgart (DE)
(72) Erfinder: GRONBACH, Roman, 70825 Korntal (DE)
(86) Internationale Anmeldenummer: PCT/DE2001/000269
(87) Internationale Veröffentlichungsnummer: WO 2001/056130

(56) Entgegenhaltungen:
- DE-A- 19 546 495
- DE-A- 19 805 926
- US-A- 6 009 000

## Beschreibung

### Stand der Technik

Die Erfindung betrifft ein Verfahren zur Regelung des Parallelbetriebs mehrerer Gleichspannungswandler mit den im Oberbegriff des Anspruchs 1 angegebenen Merkmalen sowie eine Vorrichtung zur Regelung des Parallelbetriebs mehrerer Gleichspannungswandler mit den im Oberbegriff des Anspruchs 7 angegebenen Merkmalen.

Zur Leistungserhöhung von Gleichspannungswandlern können mehrere Gleichspannungswandler parallel geschaltet und im Sinne eines Master-/Slave-Betriebes eingesetzt werden. Dabei übernimmt der als Master dienende Gleichspannungswandler die Spannungsregelung im ausgangsseitigen Gesamtsystem. Der oder die untergeordneten Wandler tragen als vom Master gesteuerte Stromquellen zur Erhöhung der Ausgangsleistung bei. In herkömmlichen Systemen wird zur Übertragung der Steuerbefehle zwischen Master und Slave eine zusätzliche Kabelverbindung benötigt, über welche analoge, zeitkontinuierliche Stromsollwerte an den oder die Slave-Wandler übermittelt werden.

Aus der DE 195 46 495 A1 sind bereits eine Schaltungsanordnung und ein Verfahren für eine gleichmäßige Aufteilung der elektrischen Leistung bekannt. Dabei werden mehrere Stromrichter als Netzteile mit Gleichrichtern zur Versorgung eines gemeinsamen Gleichstromverbrauchers parallel betrieben. Die Netzteile sind über ein Bussystem miteinander verbunden. Im Betrieb der Anlage erfolgt automatisch eine gleichmäßige Stromaufteilung.

Weiterhin sind aus der DE 198 05 926 A1 eine Vorrichtung und ein Verfahren zum gesteuerten Parallelbetrieb von Gleichspannungswandlern, insbesondere in einem Mehrspannungsbordnetz eines Fahrzeugs, bekannt. Dabei arbeitet einer der Wandler im aktiven Bereich, die anderen entweder im Vollastbetrieb oder im Leerlauf.

Ferner ist aus der Patentanmeldung DE 199 33 039 ein Gleichspannungswandler bekannt, dessen Regelsignal unter Verwendung eines Spannungsreglers und eines Stromreglers erzeugt wird. Zwischen dem Spannungsregler und dem Stromregler ist ein Begrenzer vorgesehen, der zur Begrenzung des Ausgangssignals des Spannungsreglers dient. Durch Vorgabe geeigneter Werte für einen Spannungssollwert und ein Grenzwertsignal für den Stromsollwert sind verschiedene Betriebsarten realisierbar. Dazu gehören eine Betriebsart mit geregelter Ausgangsspannung und eine Betriebsart mit geregeltem Ausgangsstrom. Letztere ist insbesondere für eine Parallelbetrieb mehrerer Gleichspannungswandler geeignet, wobei ein übergeordneter Gleichspannungswandler die Spannungsregelung übernimmt und den weiteren Wandlern lediglich den Sollwert für den einzustellenden Ausgangsstrom zuteilt. Die untergeordneten Wandler arbeiten somit als Stromquelle.

### Vorteile der Erfindung

Die Vorteile eines erfindungsgemäßen Verfahrens und einer erfindungsgemäßen Vorrichtung bestehen insbesondere darin, daß durch die beanspruchte Regelstrategie die Stromverteilung zwischen den Wandlern im Hinblick auf eine größtmögliche Stellreserve optimiert ist. Da der mit Spannungsregelung arbeitende und Master-Funktion ausübende Gleichspannungswandler in der Regel bei seinem halben Nennstrom betrieben wird, steht ihm zur dynamischen Reaktion auf kurzfristige Laständerungen sowohl in positiver als auch in negativer Richtung jeweils sein halber Nennstrom zur Verfügung.

Dies ist insbesondere dann von Vorteil, wenn zwischen den Gleichspannungswandlern eine digitale, zeitdiskrete Informationsübertragung erfolgt. Eine solche ist verzögerungsbehaftet, so daß die untergeordneten, als Stromquelle arbeitenden Gleichspannungswandler nicht sofort zur Verfügung stehen. Dies kann zu Regeldifferenzen führen. Derartige Regeldifferenzen können durch den Master-Funktion ausübenden Gleichspannungswandler, der über hinreichend Stellreserven sowohl für kurzfristige Laständerungen in positiver als auch in negativer Richtung verfügt, schnell ausgeregelt werden.

### Zeichnung

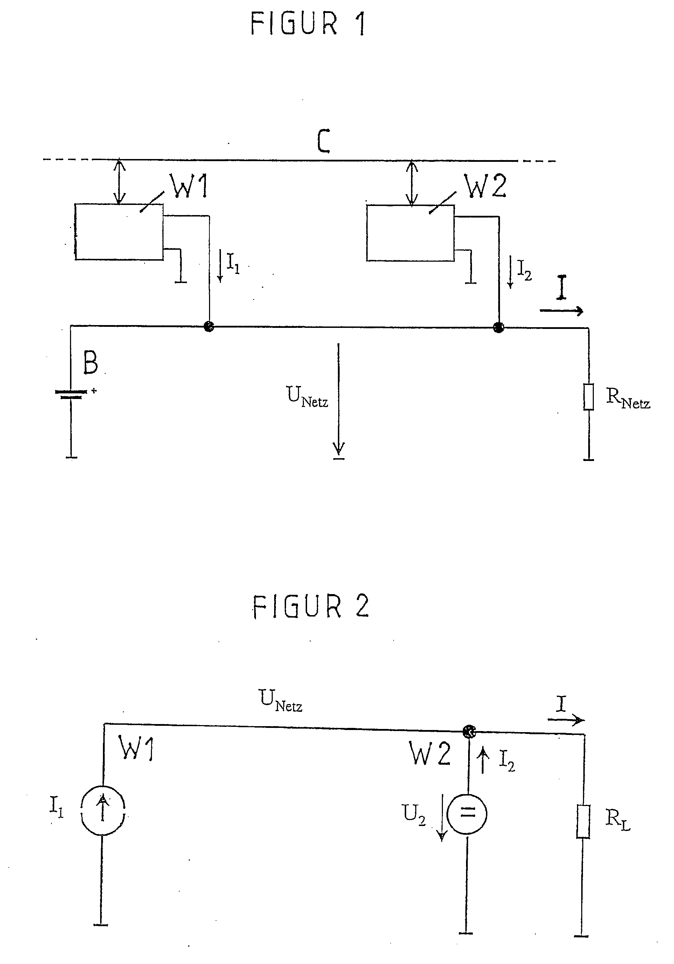

Nachfolgend wird die Erfindung anhand der Figuren beispielhaft näher erläutert. Die Figur 1 zeigt ein Blockschaltbild eines Kraftfahrzeug-Bordnetzes, in welchem zur Versorgung einer Last eine Parallelschaltung zweier Gleichspannungswandler vorgesehen ist. Die Figur 2 zeigt ein Ersatzschaltbild zweier Wandler im Parallelbetrieb.

### Beschreibung

Die Figur 1 zeigt ein Blockschaltbild eines Kraftfahrzeug-Bordnetzes, in welchem zur Versorgung einer Last eine Parallelschaltung zweier Gleichspannungswandler vorgesehen ist. Die beiden Gleichspannungswandler W1 und W2 sind zum Zwecke eines Informationsaustausches über einen CAN-Bus C miteinander verbunden. Weiterhin sind die Ausgänge beider Gleichspannungswandler miteinander verbunden. Die Aufgabe der Gleichspannungswandler W1 und W2, die an eine nicht gezeichnete Energiequelle angeschlossen sind, besteht darin, einen über eine Batterie B gepufferten Verbraucher R_{Netz} mit Energie zu versorgen. Am Verbraucher R_{netz} ist eine Spannung U_{Netz} abgreifbar.

Um das Auftreten von Koppelschwingungen zu vermeiden, übt der Wandler W2 Master-Funktion aus und arbeitet mit Spannungsregelung. Der Wandler W1, der Slave-Funktion hat, dient lediglich als Stromquelle. Die Information über den von ihm zu liefernden Stromsollwert I₁ wird dem Wandler W1 über den CAN-Bus C vom Wandler W2, der Master-Funktion hat, zugeführt. Der vom Wandler W2 zur Deckung des vorliegenden Strombedarfs zur Verfügung gestellte Strom ist mit I₂ bezeichnet. Die Berechnung des Stromsollwertes für den untergeordneten Wandler W1 erfolgt aus den gemessenen Ausgangsströmen I₁ und I₂ der Wandler. Die Übermittlung der gemessenen Ausgangsströme an den Master-Funktion ausübenden Gleichspannungswandler W2 erfolgt über den CAN-Bus C.

Die gezeigte Vorrichtung arbeitet wie folgt:
Ist der Energiebedarf des Verbrauchers R_{Netz} kleiner als der halbe Nennstrom des als Master dienenden und mit Spannungsregelung arbeitenden Gleichspannungswandlers W2, dann deckt der Wandler W2 den gesamten Strombedarf ab. Der Wandler W1 leistet in diesem Fall keinen Beitrag zur Stromversorgung des Verbrauchers.

Ist der Gesamtstrombedarf des Verbrauchers R_{Netz} größer als der halbe Nennstrom des als Master dienenden und mit Spannungsregelung arbeitenden Gleichspannungswandlers W2, dann liefert der Wandler W2 seinen halben Nennstrom. Der verbleibende Strombedarf wird von dem als Stromquelle dienenden Gleichspannungswandler W1 gedeckt.

Sind parallel zum Wandler W1 weitere Slave-Gleichspannungswandler vorgesehen, dann wird der verbleibende Strombedarf von allen Slave-Gleichspannungswandlern gedeckt, wobei alle Slave-Wandler gleiche Stromanteile liefern. Die Berechnung dieser Stromanteile erfolgt im als Master dienenden Wandler W2. Die zugehörige Informations-übermittlung zwischen den Wandlern erfolgt über den CAN-Bus C. Die Berechnung kann auch in den Slave-Wandlern aus den Meßwerten des Masters erfolgen.

Ist der Gesamtstrombedarf des Verbrauchers R_{Netz} größer als die Summe des halben Nennstroms des Wandlers W2 und des Nennstromes des Wandler W1, dann steigt der Anteil des Wandlers W2 am zu liefernden Gesamtstrom über den halben Nennstrom des Wandlers W2 an.

Sind parallel zum Wandler W1 weitere Slave-Gleichspannungswandler vorgesehen, dann wird der über den halben Nennstrom des Wandlers W2 hinausgehende Strombedarf zunächst so lange von den Slave-Wandlern gedeckt, bis diese jeweils ihren Nennstrom liefern. Erst dann steigt der Anteil des Wandlers W2 am zu liefernden Gesamtstrom über den halben Nennstrom des Wandlers W2 an.

Die Figur 2 zeigt ein Ersatzschaltbild zweier Gleichspannungswandler W1 und W2 im Parallelbetrieb. Der Wandler W2 arbeitet als Spannungsquelle, der Wandler W1 als Stromquelle. Durch Vorgabe eines Stromsollwertes vom Wandler W2 an den Wandler W1 kann der Strom I₁ als im Netz eingeprägt betrachtet werden. Der restliche Strombedarf wird dann automatisch vom Wandler W2 bereitgestellt, wobei die Vorgabe des Stromsollwertes an den Wandler W1 und der vom Wandler W2 zu liefernde Strom unter Berücksichtigung der oben im Zusammenhang mit der Figur 1 beschriebenen Regelstrategie ermittelt werden.

## Patentansprüche

1. Verfahren zur Regelung des Parallelbetriebs mehrerer Gleichspannungswandler, bei welchem einer der Gleichspannungswandler Master-Funktion und mindestens ein anderer Gleichspannungswandler Slave-Funktion ausübt, wobei der Master-Funktion ausübende Gleichspannungswandler mit Spannungsregelung und der mindestens eine andere Gleichspannungswandler als Stromquelle arbeitet, **dadurch gekennzeichnet, daß** der Gleichspannungswandler mit Spannungsregelung bei einem Gesamtstrombedarf, der kleiner ist als der halbe Nennstrom des Gleichspannungswandlers mit Spannungsregelung, den Gesamtstrombedarf deckt und bei einem Gesamtstrombedarf, der zwischen dem halben Nennstrom und dem Nennstrom des Gleichspannungswandlers mit Spannungsregelung liegt, seinen halben Nennstrom liefert und der verbleibende Strombedarf von den als Stromquelle arbeitenden Gleichspannungswandlern gedeckt wird.

2. Verfahren nach Anspruch 1, **dadurch gekennzeichnet, daß** der Gleichspannungswandler mit Spannungsregelung zur Ausregelung von kurzzeitigen Laständerungen dient.

3. Verfahren nach Anspruch 1 oder 2, **dadurch gekennzeichnet, daß** der verbleibende Strombedarf von den als Stromquellen arbeitenden Gleichspannungswandlern zu gleichen Teilen gedeckt wird.

4. Verfahren nach einem der vorhergehenden Ansprüche, **dadurch gekennzeichnet, daß** die Kommunikation zwischen dem Master-Funktion ausübenden Gleichspannungswandler und den als Stromquellen arbeitenden Gleichspannungswandlern über einen Bus erfolgt.

5. Verfahren nach Anspruch 4, **dadurch gekennzeichnet, daß** der Bus ein CAN-Bus ist.

6. Verfahren nach einem der vorhergehenden Ansprüche, **dadurch gekennzeichnet, daß** bei einem Gesamtstrombedarf, der größer ist als die Summe des halben Nennstroms des Gleichspannungswandlers mit Spannungsregelung und des gesamten Nennstroms der als Stromquelle arbeitenden Gleichspannungswandler, der Gleichspannungswandler mit Spannungsregelung mehr als seinen halben Nennstrom zur Dekkung des Gesamtstrombedarfs liefert.

7. Vorrichtung zur Regelung des Parallelbetriebs mehrerer Gleichspannungswandler, mit
- einem ersten, Master-Funktion ausübenden Gleichspannungswandler, welcher mit Spannungsregelung arbeitet,
- mindestens einem weiteren, Slave-Funktion ausübenden Gleichspannungswandler, welcher parallel zu dem Master-Funktion ausübenden Gleichspannungswandler angeordnet ist und als Stromquelle arbeitet, wobei
- die Ausgänge der Gleichspannungswandler miteinander und mit einer Last verbunden sind,
**dadurch gekennzeichnet, daß**
bei einem Gesamtstrombedarf, der kleiner ist als der halbe Nennstrom des Gleichspannungswandlers mit Spannungsregelung, der Master-Funktion ausübende Gleichspannungswandler zur Deckung des Gesamtstrombedarfs vorgesehen ist, und
bei einem Gesamtstrombedarf, der zwischen dem halben Nennstrom und dem Nennstrom des Gleichspannungswandlers mit Spannungsregelung liegt, der Master-Funktion ausübende Gleichspannungswandler zur Lieferung seines Nennstroms dient und die Slave-Funktion ausübenden Gleichspannungswandler zur Lieferung des restlichen Strombedarfs dienen.

8. Vorrichtung nach Anspruch 7, **dadurch gekennzeichnet, daß** bei einem Gesamtstrombedarf, der größer ist als die Summe des halben Nennstroms des Gleichspannungswandlers mit Spannungsregelung und der gesamte Nennstrom der als Stromquelle arbeitenden Gleichspannungswandler, der Gleichspannungswandler mit Spannungsregelung zur Lieferung mehr als seines halben Nennstroms dient.

9. Vorrichtung nach Anspruch 7 oder 8, **dadurch gekennzeichnet, daß** sie einen zwischen den Gleichspannungswandlern vorgesehenen Bus aufweist.

10. Vorrichtung nach Anspruch 9, **dadurch gekennzeichnet, daß** der Bus ein CAN-Bus ist.

## Claims

1. Method for regulating the parallel operation of a plurality of DC converters, in which one of the DC converters carries out a master function and at least one other DC converter carries out a slave function, wherein the DC converter which carries out a master function operates with a voltage regulating function and the at least one other DC converter operates as a power source, **characterized in that** the DC converter with a voltage regulating function covers, in the case of a total power demand which is less than half the rated current of the DC converter with a voltage regulating function, the total power demand, and in the case of a total power demand which is between half the rated current and the rated current of the DC converter with a voltage regulating function supplies half its rated current, and the remaining powered amount is covered by the DC converters which operate as a power source.

2. Method according to Claim 1, **characterized in that** the DC converter with a voltage regulating function serves to compensate brief changes in load.

3. Method according to Claim 1 or 2, **characterized in that** the remaining powered amount is covered, to equal proportions, by the DC power converters which operate as power sources.

4. Method according to one of the preceding claims, **characterized in that** the communication between the DC converter which carries out the master function and the DC converters which operate as power sources takes place via a bus.

5. Method according to Claim 4, **characterized in that** the bus is a CAN bus.

6. Method according to one of the preceding claims, **characterized in that** in the case of a total powered amount which is greater than the sum of half the rated current of DC converter with a voltage regulating function and the total rated current of the DC converters which operate as a power source, the DC converter with a voltage regulating function supplies more than half its rated current for the detection of the total powered amount.

7. Device for regulating the parallel operation of a plurality of DC converters, having
- a first DC converter which carries out a master function and which operates with a voltage regulating function,
- at least a further DC converter which carries out a slave function and which is arranged parallel to the DC converter carrying out the master function, and operates as a power source, wherein
- the outputs of the DC converters are connected to one another and to a load,
**characterized in that**
in the case of a total powered amount which is less than half the rated current of the DC converter with a voltage regulating function, the DC converter which carries out the master function is provided for covering the total powered amount, and
in the case of a total powered amount which is between half the rated current and the rated current of the DC converter with a voltage regulating function, the DC converter which carries out the master function serves to supply its rated current, and the DC converters which carry out the slave function serve to supply the rest of the powered amount.

8. Device according to Claim 7, **characterized in that** in the case of a total powered amount which is greater than the sum of half the rated current of the DC converter with a voltage regulating function and the entire rated current of the DC converters which operate as a power source, the DC converter with a voltage regulating function serves to supply more than half its rated current.

9. Device according to Claim 7 or 8, **characterized in that** said device has a bus which is provided between the DC converters.

10. Device according to Claim 9, **characterized in that** the bus is a CAN bus.

## Revendications

1. Procédé de régulation du fonctionnement en parallèle de plusieurs convertisseurs de tension continue, selon lequel l'un des convertisseurs de tension continue exerce la fonction de maître et au moins un autre convertisseur de tension continue la fonction d'esclave, le convertisseur de tension continue qui exerce la fonction de maître fonctionnant avec une régulation de la tension et l'au moins un autre convertisseur de tension continue faisant office de source de courant, **caractérisé en ce que** le convertisseur de tension continue avec régulation de la tension, dans le cas d'un besoin en courant total qui est inférieur à la moitié du courant nominal du convertisseur de tension continue avec régulation de la tension, couvre l'ensemble du besoin en courant total et, dans le cas d'un besoin en courant total qui est compris entre la moitié du courant nominal et le courant nominal du convertisseur de tension continue avec régulation de la tension, délivre la moitié de son courant nominal et le besoin en courant restant est couvert par les convertisseurs de tension continue qui font office de sources de courant.

2. Procédé selon la revendication 1, **caractérisé en ce que** le convertisseur de tension continue avec régulation de la tension sert à la régulation de variations de charge de courte durée.

3. Procédé selon la revendication 1 ou 2, **caractérisé en ce que** le besoin en courant restant est couvert à parts égales par les convertisseurs de tension continue qui font office de sources de courant.

4. Procédé selon l'une des revendications précédentes, **caractérisé en ce que** la communication entre le convertisseur de tension continue qui exerce la fonction de maître et les convertisseurs de tension continue qui font office de sources de courant s'effectue par le biais d'un bus.

5. Procédé selon la revendication 4, **caractérisé en ce que** le bus est un bus CAN.

6. Procédé selon l'une des revendications précédentes, **caractérisé en ce que** dans le cas d'un besoin en courant total qui est supérieur à la somme de la moitié du courant nominal du convertisseur de tension continue avec régulation de la tension et du courant nominal total du convertisseur de tension continue qui fait office de source de courant, le convertisseur de tension continue avec régulation de la tension délivre plus de la moitié de son courant nominal pour couvrir le besoin en courant total.

7. Dispositif de régulation du fonctionnement en parallèle de plusieurs convertisseurs de tension continue, comprenant
- un premier convertisseur de tension continue qui exerce la fonction de maître, lequel fonctionne avec une régulation de la tension,
- au moins un convertisseur de tension continue supplémentaire qui exerce la fonction d'esclave, lequel est monté en parallèle avec le convertisseur de tension continue qui exerce la fonction de maître et fait office de source de courant,
- les sorties des convertisseurs de tension continue étant reliées entre elles et avec une charge,
**caractérisé en ce que**
dans le cas d'un besoin en courant total qui est inférieur à la moitié du courant nominal du convertisseur de tension continue avec régulation de la tension, le convertisseur de tension continue qui exerce la fonction de maître est prévu pour couvrir l'ensemble du besoin en courant total et,
dans le cas d'un besoin en courant total qui est compris entre la moitié du courant nominal et le courant nominal du convertisseur de tension continue avec régulation de la tension, le convertisseur de tension continue qui exerce la fonction de maître sert à délivrer la moitié de son courant nominal et les convertisseurs de tension continue qui font office de sources de courant servent à délivrer le besoin en courant restant.

8. Dispositif selon la revendication 7, **caractérisé en ce que** dans le cas d'un besoin en courant total qui est supérieur à la somme de la moitié du courant nominal du convertisseur de tension continue avec régulation de la tension et du courant nominal total du convertisseur de tension continue qui fait office de source de courant, le convertisseur de tension continue avec régulation de la tension sert à délivrer plus de la moitié de son courant nominal.

9. Dispositif selon la revendication 7 ou 8, **caractérisé en ce qu'**il présente un bus prévu entre les convertisseurs de tension continue.

10. Dispositif selon la revendication 9, **caractérisé en ce que** le bus est un bus CAN.
